# EUROPEAN PATENT APPLICATION

(11) **EP 4 746 337 A1**
(43) Date of publication of application: **20.05.2026**
(21) Application number: 24214005.1
(22) Date of filing: 19.11.2024
(51) Int. Cl.: H04L 9/00, H04L 9/08

(54) **REVEALING UNIT, COMPUTING SYSTEM AND METHOD FOR REVEALING BLINDING ATTACKS**

(71) Applicant: Universität Münster Körperschaft des öffentlichen Rechts, 48149 Münster (DE); Universität Heidelberg Körperschaft des öffentlichen Rechts, 69117 Heidelberg (DE)
(72) Inventor: Jaha, Roland, 48149 Münster (DE); Graham-Scott, Connor Alexander, 48161 Münster (DE); Schuck, Carsten, 48143 Münster (DE)
(74) Representative: Michalski Hüttermann & Partner Patentanwälte mbB

(57) **Abstract**

A revealing unit (100) for revealing a blinding attack in a computing system (102), preferably in a Quantum Key Distribution system, is described. The revealing unit (100) comprising a revealing nanowire (104); wherein the revealing unit (100) is configured, in the event of a blinding attack, to change from a secure state to a reveal state by changing an electrical characteristic of the revealing nanowire (100) to reveal the blinding attack.

## Description

The invention relates to a revealing unit, a computing system and a method for revealing blinding attacks.

Privacy in today's communication systems is based on classical encryption techniques such as asymmetric cryptographic system (RSA) or elliptic curve cryptography (ECC). With the recent progress in quantum computing, the integrity of classical encryption is endangered because it has been shown that quantum algorithms, such as Shor's algorithm, allow for efficiently solving the mathematical problems underlying widely used classical encryption schemes. Provably secure encryption remains possible using so-called one-time pads, which however require symmetric key pairs, thus posing the problem of distributing secure keys. Key distribution with security proofs guaranteed by the laws of quantum physics is possible when using quantum bits, e.g. single photons that encode information in their polarization, orbital angular momentum, temporal or other degrees of freedom. Any hacking attempt would inevitably alter the properties of such qubits, therewith allowing the possibility of noticing any attack that would breach the security of the generated key. Consequently, Quantum Key Distribution (QKD) systems have been developed as the currently only key distribution scheme with mathematically provable security for generating private symmetric key pairs for encrypting data using the one-time pad.

While QKD schemes can allow unconditional privacy of encrypted communication, in contrast to their classical counterparts, the practical implementation of such secure schemes opens side-channels for attacking insufficiencies in the implementation of otherwise information theoretic secure quantum cryptography schemes. The most relevant such hacking attack is the so-called 'detector blinding attack', which tries to exploit inadequacies of the single-photon detector implementations. Our invention allows for revealing attacks of the 'detector blinding'-type for modern superconducting nanowire single-photon detectors that have established themselves as the most promising detector technology for quantum key distribution. Our invention hence fixes a critical security issue in modern implementations of quantum cryptography.

Many present QKD systems that use single photons for transmitting qubits utilize superconducting nanowire single-photon detectors (SNSPDs) on the receiver side due to their superior performance metrics and prospects for scaling the technology to large system size.

Such detectors in general can consist of a few tens to hundreds of nanometer wide nanowires made from a superconducting material with a typical thickness of a few to a few ten nanometers and are typically operated at a few Kelvin temperatures. Their working principle is based on creating a transient resistive state in a current-biased nanowire upon absorption of individual photons.

The relatively large normal resistance of the nanowire or sections thereof diverts the bias current to a load resistor where a corresponding voltage drop can be recorded, indicating the detection of a photon. The thermal energy in the resistive section of the nanowire is then dissipated by continuous cooling through the substrate and the bias current returns to the superconducting wire.

It has been shown that QKD implementations employing this type of detector are vulnerable to the detector blinding attack exploiting superlinear detector control. Using continuous wave (CW) or pulsed light, a hacker can manipulate the duration over which the transient resistive state persists in the nanowire and hence control the voltage drop at the load resistor on the receiver's end. A hacker intercepts the quantum channel and sends suitable CW light or pulses of light to the receiver such that the output of the receiver's comparator mimics the signature produced by the sender. Therefore, the hacker and the receiver will both have the same quantum bit pattern, allowing the hacker access to the secret key without introducing detectable errors during the key generation process, thus breaching the security of the protocol. This type of attack constitutes the most severe vulnerability in today's QKD systems because it can be implemented with current technology, corresponding loopholes have experimentally been demonstrated on real-world QKD systems and the attack provides access to the full information about the secret key.

It is therefore an object of the present invention to provide a revealing unit, a computing system as well as a method for revealing a blinding attack in a computing system.

Regarding the revealing unit, the object is solved by a revealing unit according to claim 1. Regarding the computing system, the object is solved by a computing system according to claim 7 and regarding the method, the object is solved by a method according to claim 12.

The revealing unit for revealing a blinding attack in a computing system comprises a revealing nanowire, wherein the revealing unit is configured, in the event of a blinding attack, to change from a secure state to a reveal state by changing an electrical characteristic of the revealing nanowire to reveal the blinding attack.

The computing system is preferably a Quantum Key Distribution (QKD) system.

The secure state is a state of the computing system in which a generation of secure keys and transfer of data runs without any complications or attacks; this state can also be named as normal state. The reveal state can be understood as a state after the blinding attack has been revealed. In this state, for example countermeasures can be initiated.

The revealing unit allows for revealing detector blinding attacks in a computing system, especially in a QKD system, with a nanowire that only requires a suitable electrical characteristic and does not necessarily have to be operated as a detector.

In an embodiment the electrical characteristic is the kinetic inductance of the revealing nanowire. In other words, the invention exploits an electrical characteristic, the kinetic inductance, that relies on intrinsic material properties of the revealing nanowire to reveal a blinding attack in the computing system. Contrary to other prior art implementations of superconducting nanowire single photon detectors this approach allows for exploiting extremely small kinetic inductance values, which are beneficial for preventing the blinding attack, while being able to efficiently deliver photons to the revealing unit and the detector unit. This makes the revealing unit also more cost effective.

According to an embodiment, the revealing unit is further configured, in the event of the blinding attack, to change from the secure state to the reveal state by latching the revealing nanowire to a permanent resistive state.

This embodiment is based on the technical effect that the relevant metric for the latching probability is the kinetic inductance, which arises due to the kinetic energy of the charge carriers in a conductor rather than magnetic fields or magnetic inductance. In general, the larger the kinetic inductance is, the longer it takes for the bias current to return to the detector. As the kinetic inductance is proportional to the length and width of the wire, the latching probability can be tuned straightforwardly by changing the length or width of the revealing nanowire forming the detector or external nanowire inductors.

In other words, the revealing unit advantageously acts as a switch between a superconducting secure state (the secure state) and a resistive secure state (the reveal state), which is triggered for each individual instance a blinding attack is executed and neither requires finetuning of detector parameters (as the mechanism that is used for revealing a blinding attack is different from the mechanism underlying single photon detection) nor does it rely on statistical analysis and correlations between detection events.

In an embodiment, the revealing unit is further configured, in the event of the blinding attack, to latch the revealing nanowire to the permanent resistive state based on the amount of optical power required to blind a detector unit of the computing system. In this embodiment, in the case of a blinding attack, the amount of optical power required to blind the detector would preferably drive the revealing nanowire into the latching regime. This can immediately be detected when monitoring the nanowire or load resistance and hence directly indicates hacking without producing excess data or opening other side channel attacks on detector performance parameters. In such implementations the revealing unit can preferably reveal every instance of a blinding attack because the revealing nanowire of the revealing unit would latch even for a 'single-shot' of a detector blinding pulse.

According to a further embodiment the revealing unit is further configured to latch the revealing nanowire to the permanent resistive state, if a number of photons exceeds a single photon rate of the revealing nanowire. This embodiment is based on the idea that blinding in general only occurs precisely when the single photon rate, which can be typically used for secure key generation, is exceeded and the revealing of the blinding attack as described takes effect precisely then. However, the revealing unit is preferably designed in such a way that it comprises a sufficiently large kinetic inductance so that it does not latch in the absence of a blinding attack with cw or pulsed light.

In an embodiment the revealing unit is a single nanowire unit. In such an embodiment, the engineering of a length and/or width of the nanowire and an accompanying meander allows for varying the kinetic inductance of the unit over a wide range. With low kinetic inductance the latching probability can be set to a desired level for revealing blinding attacks without having to resort to detecting additional photons and corresponding data acquisition. If the amount of incident light passes that considered critical for a blinding attack, the revealing nanowire will enter a latched state that is straightforwardly readout and remains insensitive to any additional light that may be used for tampering with the unit but instead requires an active reset from the receiver thus signaling the hacking attempt.

The computing system, which is preferably Quantum Key Distribution system, comprises:
- a signal source for outputting a light signal;
- a detector unit to receive the outputted light signal; wherein the signal source and the detector unit are coupled to each other via at least one waveguide ; and
- a revealing unit for revealing a blinding attack.

The waveguide is preferably an integrated waveguide, a nanowire or an optical fiber. The light signal from the signal source is preferably outputted in the at least one waveguide.

According to an embodiment, the detector unit and the revealing unit are configured as separate entities. This embodiment allows an optimization of the detector unit metrics independently from the metrics of the revealing unit. The independent optimization increases the overall computing system performance.

According to a further embodiment, the detector unit and the revealing unit are configured such that the outputted light signal is splitted between the detector unit and the revealing unit. Preferably, the splitting ration is designed in such a way that, in the event of a potentially successful blinding attack, enough photons are probabilistically split in the direction of the revealing unit so that the revealing nanowire switches to the reveal state.

According to an embodiment the detector unit and the revealing unit are integrated in a photonic integrated circuit. Preferably, the detector unit and the revealing unit are integrated in a photonic integrated circuit with nanophotonic waveguides. The advantage of this embodiment is that such an implementation is difficult to manipulate after the fabrication. A further advantage is that the above-mentioned splitting of the outputted light signal can be easily achieved by such an implementation. A third advantage is that such implementations are fully compatible with processes for mass production, which leads to an improved cost efficiency.

A further advantage may be that the waveguide-integrated implementation allows for minimal lengths of the revealing nanowire used in the revealing unit, which allows for optimal tunability of the kinetic inductance. Therefore, the low kinetic inductance implementations minimize the possibility to get access to secure bits of the key, so those are the most relevant ones.

According to an alternative embodiment the detector unit and the revealing unit are combined as one entity. That means for example that the two components, the detector unit and the revealing unit, are combined in one device. Such an implementation allows a compact design. Moreover, this embodiment reduces hypothetical remaining side channel attacks exploiting any vulnerability that may arise from space-like separation of a detector from the unit to reveal a corresponding attack.

The method for revealing blinding attacks in a computing system, preferably in a Quantum Key Distribution system, comprising a signal source, a detector unit and a revealing unit, the method comprising the steps of:
S1) Outputting a light signal by the signal source into at least one waveguide, wherein the waveguide couples the signal source, the detector unit and the revealing unit;
S2) Receiving the outputted light signal by the detector unit and the revealing unit;
S3) In the event of a blinding attack, changing from a secure state to a reveal state by changing an electrical characteristic of a revealing nanowire of the revealing unit to reveal the blinding attack by the revealing unit.

The method is preferably executed in a computing system as explained above.

According to an embodiment, the electrical characteristic is the kinetic inductance of a revealing nanowire of the revealing unit and the method further comprising the step:
S4) In the event of the blinding attack, changing from the secure state to the reveal state by latching the revealing nanowire to a permanent resistive state by the revealing unit.

Moreover, a computer program product is disclosed, the computer program product comprising instructions which, when the program is executed by a computer, cause the computer to carry out the method as explained above.

In addition, a computer-readable storage medium is disclosed, the computer-readable storage medium comprising instructions which, when executed by a computer, cause the computer to carry out the method as explained above.

The advantages and preferred embodiments mentioned with regard to the revealing unit are to be transferred analogously to the computing system, the method, the computer program product and the computer-readable storage medium and vice versa.

Some embodiments of this invention will be described in detail, with reference to the following figures, wherein
- Fig. 1: shows a revealing unit according to the invention;
- Fig. 2: shows a computing system according to a first embodiment, wherein a detector unit and a revealing unit are configured as separate entities;
- Fig. 3: shows a computing system according to a second embodiment, wherein a detector and a revealing unit are combined as one entity; and
- Fig. 4: shows a graph that illustrates the number of successfully controlled bits versus the kinetic inductance of the respective nanowire of the revealing unit.

In the figures, components with the same effect are always marked with the same reference signs.

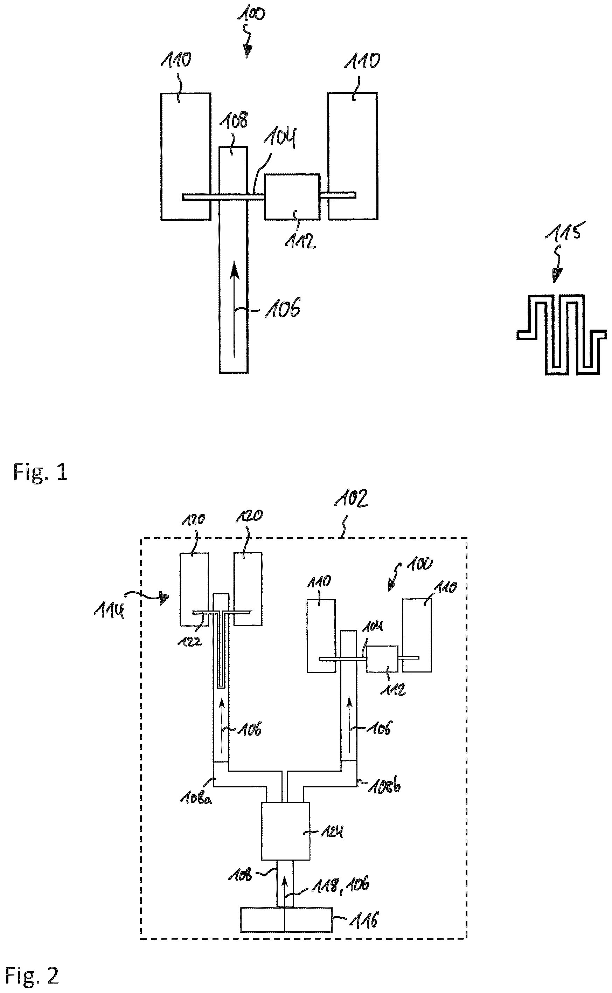

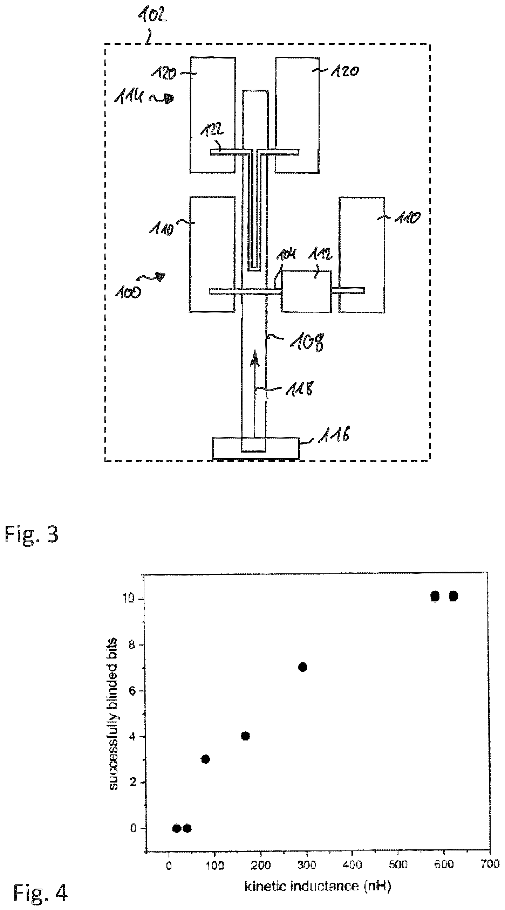

Fig. 1 shows a revealing unit 100 for revealing a blinding attack in a computing system 102 (see Fig. 2 and 3), preferably in a Quantum Key Distribution system.

The revealing unit 100 comprises a revealing nanowire 104 that perpendicular crosses a photon path 106 of a waveguide 108, especially an integrated waveguide of the computing system 102. This design is also known as a "bowtie" design. That's also why the revealing nanowire 104 can also be named "bowtie nanowire". The region in which the photons can be absorbed is limited to the overlap of the revealing nanowire 104 with the waveguide 108.

The revealing nanowire 104 connects two electrodes 110, which are configured to receive a signal which is emitted into the revealing nanowire 104.

Further the revealing unit 100, especially the revealing nanowire 104 comprises a region 112 of a desired kinetic induction. This region 112 is not sensitive to exposure with (low levels of) light. Preferably, the revealing nanowire 104, especially in the region 112, is patterned in a meandering shape 115. This meandering shape allows to adjust an electrical characteristic, namely the kinetic inductance, without changing the efficiency of the computing system 102 and especially of a detector unit 114 of the computing system 102 (see Fig. 2 and 3). An example of such a meandering nanowire is shown in the lower right corner of Fig. 1.

The revealing unit 100 is configured, in the event of a blinding attack, to change from a secure state to a reveal state by changing an electrical characteristic of the revealing nanowire 104 to reveal the blinding attack.

In detail, in case of a blinding attack the amount of optical power emitted in the waveguide 108 exceeds predetermined threshold. Then, the revealing nanowire 104 latches from the secure state to the reveal state. After the detection of the blinding attack, countermeasures can be initiated against the blinding attack.

Fig. 2 shows a computing system 102 according to a first embodiment.

In this embodiment, a detector unit 114 and a revealing unit 100 are configured as separate entities. Moreover, the computing system 102 comprises a signal source 116.

The signal source 116 is configured to output a light signal 118. The light signal 118 corresponds to the photon path 106. The detector unit 114 is configured to receive the outputted light signal 118; wherein the signal source 116 and the detector unit 114 are coupled to each other via at least one waveguide 108.

The detector unit 114 comprises electrodes 120 for receiving the light signal 118. The electrodes 120 are also connected with each other via a superconductive nanowire 122, which is on top of a nanophotonic waveguide that acts as a single photon detector 122. The superconductive nanowire 122 preferably comprises a U-shape, also known as a hairpin-shape.

As already mentioned, the detector unit 114 and the revealing unit 100 are configured as separate entities. This allows a separate optimization of the metrics of the detector unit 114 and the metrics of the revealing unit 100, especially the metrics of the revealing nanowire 104.

To split the generated light signal 118 the computing system 102 comprises a splitting unit 124, preferably an optical splitter. More preferably, the splitting unit 124 is an 50/50-optical splitter. That means that the half of the generated light signal 118 is guided to a first part 108a of the waveguide 108, which leads to the detector unit 114. The other half is guided to a second part 108b of the waveguide 108, which leads to the revealing unit 100. Alternatively, the splitting unit 124 can be a Multi-Mode Interference device, a directional coupler, a Y-splitter or similar. The splitting unit 124 splits the incoming optical signal 118 in probabilistically or at random with a given ratio (e.g. 40:60) to emphasize that an adversary cannot control this splitting.

In case of a blinding attack, the amount of optical power required to blind the detector unit 114 exceeds a predetermined threshold, especially a number of photons exceeds a single photon rate of the revealing nanowire 104. In this case, the revealing nanowire 104 of the revealing unit 100 latches to the permanent resistive state to reveal the blinding attack.

An alternative embodiment of the computing system 102 according to the invention can be seen in Fig. 3.

In this embodiment, the detector unit 114 and the revealing unit 100 are combined as one entity. This allows a more compact design of the computing system 102 compared to the separate configuration as mentioned with regard to Fig. 2. In addition, such a configuration reduces hypothetical remaining side channel attacks exploiting any vulnerability that may arise from space-like separation of a detector from the unit to reveal a corresponding attack.

As can be seen in Fig. 3, there is no splitting of the generated light signal 118. Instead, the light signal 118 is fully guided to the revealing unit 100 and the detector unit 114. In the embodiment according to Fig. 3, the revealing unit 100 is arranged in front of the detector unit (viewed in the direction of travel of the light signal 118).

If a blinding attack occurs and therefore the amount of optical power exceeds the predetermined threshold, the revealing nanowire 104 latches from the secure state to the revealing state. After this, the blinding attack is detected, and countermeasures can be initiated. For example, the revealing unit 100 can be used interrupt the key generation process, if secure key generation (maybe due to a blinding attack) cannot be guaranteed. In this case the key will never be used to encrypt private data which remains secure simply by interrupting the key generation process.

Furthermore, the design of the computing system 102 and the revealing unit 100 corresponds to the computing system 102 and the revealing unit 100 according to Fig. 2 and the revealing unit according to Fig. 1, so that reference is made to their description with regard to structure and function.

Fig. 4 shows a diagram that illustrates the number of successfully controlled bits in a blinding attack versus the kinetic inductance of the respective revealing nanowire 104 of the revealing unit 100.

In other words, the diagram shows how the number of quantum bits that a potential hacker can copy by a blinding attack reduces to zero, if the kinetic inductance of the revealing nanowire 104 decreases.

The graph according to Fig. 4 was made based on measurements and shows a successful blinding attack for the detector unit 114 at a kinetic inductance of around 625nH. For this value of the kinetic inductance, it is possible to control the receiver's output voltage over a time of around 50 ns without latching. For a bit rate of e.g. 200 Mb/s, it would mean that the hacker can control at least 10 bits that the signal source 116 has sent and periodically repeat the attack. However, the invention is not limited to the above-mentioned arbitrary example value of a bit rate. In contrary and advantageously the invention can be carried out at any bit rate.

However, the graph also shows that contrarily, when the kinetic inductance of the revealing nanowire 104 of the revealing unit 100 is lower, a hacker is only able to control fewer bits before latching. Eventually, when the kinetic inductance is below 40 nH, any hacking attempt results in latching of the revealing nanowire 104.

A further advantage may be that the waveguide-integrated implementation allows for minimal lengths of the revealing nanowire used in the revealing unit, which allows for optimal tunability of the kinetic inductance. As shown in Fig. 4, the low kinetic inductance implementations minimize the possibility to get access to secure bits of the key, so those are the most relevant ones. The inventors therefore performed a proof-of-principle experiment that showed the dependence of the effectiveness of a blinding attack on the kinetic inductance of the detector unit 100 that can be used for the respective QKD system.

### List of reference signs

- 100: revealing unit
- 102: computing system
- 104: revealing nanowire
- 106: photon path
- 108: waveguide of the computing system
- 110: electrodes
- 112: region of desired kinetic induction
- 114: detector unit
- 115: meandering shape
- 116: signal source
- 118: light signal
- 120: electrodes of the detector unit
- 122: superconductive nanowire
- 124: splitting unit

## Claims

1. Revealing unit (100) for revealing a blinding attack in a computing system (102), preferably in a Quantum Key Distribution system, the revealing unit (100) comprising a revealing nanowire (104);
wherein the revealing unit (100) is configured, in the event of a blinding attack, to change from a secure state to a reveal state by changing an electrical characteristic of the revealing nanowire (100) to reveal the blinding attack.

2. Revealing unit (100) according to claim 1, wherein the electrical characteristic is the kinetic inductance of the revealing nanowire (104).

3. Revealing unit (100) according to claim 2, wherein the revealing unit (100) is further configured, in the event of the blinding attack, to change from the secure state to the reveal state by latching the revealing nanowire to a permanent resistive state.

4. Revealing unit (100) according to claim 3, wherein the revealing unit (100) is further configured, in the event of the blinding attack, to latch the revealing nanowire (104) to the permanent resistive state based on the amount of optical power required to blind a detector unit (100) of the computing system (102).

5. Revealing unit (100) according to claim 3 or 4, wherein the revealing unit (100) is further configured to latch the revealing nanowire (104) to the permanent resistive state, if a number of photons exceeds a single photon rate of the revealing nanowire.

6. Revealing unit (100) according to any one of the preceding claims, wherein the revealing unit (100) is a single nanowire unit.

7. Computing system (102), preferably Quantum Key Distribution system, comprising:
- a signal source (116) for outputting a light signal (118);
- a detector unit (114) to receive the outputted light signal (118); wherein the signal source (116) and the detector unit (100) are coupled to each other via at least one waveguide (108); and
- a revealing unit (100) for revealing a blinding attack according to one of claims 1 to 6.

8. Computing system (102) according to claim 7, wherein the detector unit (114) and the revealing unit (100) are configured as separate entities.

9. Computing system (102) according to claim 8, wherein the detector unit (114) and the revealing unit (100) are configured such that the outputted light signal (118) is splitted between the detector unit (114) and the revealing unit (100).

10. Computing system (102) according to claim 8 or 9, wherein the detector unit (114) and the revealing unit (100) are integrated in a photonic integrated circuit.

11. Computing system (102) according to claim 7, wherein the detector unit (114) and the revealing unit (100) are combined as one entity.

12. Method for revealing blinding attacks in a computing system (102), preferably according to any one of claims 7 to 11, comprising a signal source (116), a detector unit (114) and a revealing unit (100), the method comprising the steps of:
S1) Outputting a light signal (118) by the signal source (116) into at least one waveguide (108), wherein the waveguide (108) couples the signal source (116), the detector unit (114) and the revealing unit (100);
S2) Receiving the outputted light signal (118) by the detector unit (114) and the revealing unit (100);
S3) In the event of a blinding attack, changing from a secure state to a reveal state by changing an electrical characteristic of the revealing unit (100) to reveal the blinding attack.

13. Method according to claim 12, wherein the electrical characteristic is the kinetic inductance of a revealing nanowire (104) of the revealing unit (100) and the method further comprising the step:
S4) In the event of the blinding attack, changing from the secure state to the reveal state by latching the revealing nanowire (104) to a permanent resistive state by the revealing unit (100).

14. A computer program product comprising instructions which, when the program is executed by a computer, cause the computer to carry out the method of claims 12 or 13.

15. A computer-readable storage medium comprising instructions which, when executed by a computer, cause the computer to carry out the method of claims 12 or 13.
